# EUROPEAN PATENT APPLICATION

(11) **EP 3 223 229 A1**
(43) Date of publication of application: **27.09.2017**
(21) Application number: 16190163.2
(22) Date of filing: 22.09.2016
(51) Int. Cl.: G06Q 50/00, G06F 21/10

(54) **SYSTEMS AND METHODS FOR IDENTIFYING MATCHING CONTENT**

(30) Priority: 22.03.2016 US 201615077840; 23.03.2016 WO PCT/US2016/023768
(71) Applicant: Facebook Inc., Menlo Park, California 94025 (US)
(72) Inventor: KERETH, Lior Ben, Menlo Park, CA California 94025 (US); AMBAR, Eran, Menlo Park, CA California 94025 (US); KHADKEVICH, Maksim, Menlo Park, CA California 94025 (US); BILOBROV, Sergiy, Menlo Park, CA California 94025 (US); LUO, Xiaoxi, Menlo Park, CA California 94025 (US)
(74) Representative: Schröer, Gernot H.

(57) **Abstract**

Systems, methods, and non-transitory computer-readable media can determine that a publisher is providing a first live content stream for distribution through the social networking system, the first live content stream including copyrighted content. A determination is made that a broadcaster is providing a second live content stream for distribution through the social networking system. The first live content stream and the second live content stream are exposed to at least some users of the social networking system. While the first live content stream and the second live content stream are being distributed through the social networking system, a determination is made that at least some portions of the second live content stream match copyrighted content included in the first live content stream. At least one notification is provided to the broadcaster of the second live content stream, wherein the notification indicates a potential copyright violation by the broadcaster.

## Description

### FIELD OF THE INVENTION

The present technology relates to the field of content matching. More particularly, the present technology relates to techniques for identifying matching content items.

### BACKGROUND

Today, people often utilize computing devices (or systems) for a wide variety of purposes. Users can use their computing devices to, for example, interact with one another, access content, share content, and create content. In some cases, content items can include postings from members of a social network. The postings may include text and media content items, such as images, videos, and audio. The postings may be published to the social network for consumption by others.

### SUMMARY

Various embodiments of the present disclosure can include systems, methods, and non-transitory computer readable media configured to determine that a publisher is providing a first live content stream for distribution through the social networking system, the first live content stream including copyrighted content. A determination is made that a broadcaster is providing a second live content stream for distribution through the social networking system. The first live content stream and the second live content stream are exposed to at least some users of the social networking system. While the first live content stream and the second live content stream are being distributed through the social networking system, a determination is made that at least some portions of the second live content stream match copyrighted content included in the first live content stream. At least one notification is provided to the broadcaster of the second live content stream, wherein the notification indicates a potential copyright violation by the broadcaster.

In an embodiment, the systems, methods, and non-transitory computer readable media are configured to receive a request to live stream the first live content stream from a computing device of the publisher, the request indicating that at least some content in the first live content stream is copyrighted.

In an embodiment, the systems, methods, and non-transitory computer readable media are configured to cause a set of fingerprints to be generated for the first live content stream as the first live content stream is received from the computing device of the publisher and store the set of fingerprints for use in identifying other content that matches any portions of the first live content stream.

In an embodiment, the systems, methods, and non-transitory computer readable media are configured to determine that the broadcaster of the second live content stream is continuing to provide the second live content stream despite having received the at least one notification and provide at least one notification to the publisher of the first live content stream, wherein the notification indicates a potential copyright violation by the broadcaster of the second live content stream, and wherein the notification identifies at least some portions of the second live content stream that match copyrighted content in the first live content stream.

In an embodiment, the systems, methods, and non-transitory computer readable media are configured to determine that the second live content stream is being shared publically through the social networking system.

In an embodiment, the systems, methods, and non-transitory computer readable media are configured to determine that the second live content stream is being shared privately through the social networking system and determine that the broadcaster has consented to sharing the portions of the second live content stream that match the copyrighted content with the publisher of the first live content stream.

In an embodiment, the systems, methods, and non-transitory computer readable media are configured to provide the publisher with an interface for viewing at least the portions of the second live content stream that match the copyrighted content in the first live content stream.

In an embodiment, the interface includes options for at least playing back the portions of the second live content stream that match the copyrighted content in the first live content stream and reporting the second live content stream as a copyright violation.

In an embodiment, the systems, methods, and non-transitory computer readable media are configured to determine at least one contiguous sequence of frames in the second live content stream that match a contiguous sequence of frames in the first live content item, the sequence of frames satisfying a threshold duration of time.

In an embodiment, the systems, methods, and non-transitory computer readable media are configured to determine that portions of the second live content stream that match the copyrighted content included in the first live content stream satisfy a threshold duration of time and cause the second live content stream to be inaccessible through the social networking system.

It should be appreciated that many other features, applications, embodiments, and/or variations of the disclosed technology will be apparent from the accompanying drawings and from the following detailed description. Additional and/or alternative implementations of the structures, systems, non-transitory computer readable media, and methods described herein can be employed without departing from the principles of the disclosed technology.

### BRIEF DESCRIPTION OF THE DRAWINGS

**FIGURE 1** illustrates an example system including an example content provider module configured to provide access to various content items, according to an embodiment of the present disclosure.
**FIGURE 2** illustrates an example of a content matching module, according to an embodiment of the present disclosure.
**FIGURE 3A** illustrates an example process for live streaming content through a social networking system, according to an embodiment of the present disclosure.
**FIGURE 3B** illustrates an example process for identifying content that matches a live content stream in a social networking system, according to an embodiment of the present disclosure.
**FIGURE 4** illustrates an example process for identifying and managing matching content, according to various embodiments of the present disclosure.
**FIGURE 5** illustrates an example process for managing matches between content items, according to various embodiments of the present disclosure.
**FIGURE 6** illustrates a network diagram of an example system including an example social networking system that can be utilized in various scenarios, according to an embodiment of the present disclosure.
**FIGURE 7** illustrates an example of a computer system or computing device that can be utilized in various scenarios, according to an embodiment of the present disclosure.

The figures depict various embodiments of the disclosed technology for purposes of illustration only, wherein the figures use like reference numerals to identify like elements. One skilled in the art will readily recognize from the following discussion that alternative embodiments of the structures and methods illustrated in the figures can be employed without departing from the principles of the disclosed technology described herein.

### DETAILED DESCRIPTION

### APPROACHES FOR IDENTIFYING MATCHING CONTENT

Today, people often utilize computing devices (or systems) for a wide variety of purposes. Users can use their computing devices to, for example, interact with one another, access content, share content, and create content. In some cases, content items can include postings from members of a social network. The postings may include text and media content items, such as images, videos, and audio. The postings may be published to the social network for consumption by others.

Under conventional approaches, content may be broadcast through a content provider. For example, such content providers may broadcast content through various broadcast mediums (e.g., television, satellite, Internet, etc.). In one example, a broadcast can include content that is being captured and streamed live by a publisher. For example, a publisher can provide content (e.g., live concert, TV show premiere, etc.) to be broadcasted as part of a live content stream. Such events can be captured using, for example, video capture devices (e.g., video cameras) and/or audio capture devices (e.g., microphones). This captured content can then be encoded and distributed to user devices over a network (e.g., the Internet) in real-time by a content provider (e.g., a social networking system). In some instances, an unauthorized entity may capture a copy of the publisher's live content stream and stream the copied content through the content provider as part of a separate live content stream. For example, this entity may record a video of the publisher's live content stream as the content is being presented on a television display. Under conventional approaches, it can be difficult to detect such unauthorized live content streams and this difficulty can be especially problematic when the live content streams contain copyrighted content. For example, under conventional approaches, a content provider would typically check whether a content item is infringing a copyrighted content item after the content item has been uploaded to the content provider in its entirety. The content provider would then analyze the uploaded content item against the copyrighted content item to identify whether any portions match. While such approaches may be adequate for detecting copyright infringement in content items that are served on-demand, they are generally inadequate for detecting copyright infringement in content items that are being streamed live. Accordingly, such conventional approaches may not be effective in addressing these and other problems arising in computer technology.

An improved approach rooted in computer technology overcomes the foregoing and other disadvantages associated with conventional approaches specifically arising in the realm of computer technology. In various embodiments, a publisher can provide content to be streamed, or broadcasted, through a social networking system as part of a live content stream. The publisher can indicate that the live content stream is copyrighted and, based on this indication, the social networking system can generate fingerprints of the content as the content is streamed live. These fingerprints can be stored in a reference database, for example, and used for identifying duplicate content in other live content streams and/or on-demand content items. For example, as the publisher's content is being streamed live, the social networking system can determine whether any other live content streams and/or on-demand content items match the publisher's copyrighted live content stream either in whole or in part. Any portion of content items that match the publisher's live content stream may be copyright violations. In such instances, the unauthorized broadcasters and/or the publisher of the live content stream (e.g., copyright holder) can be notified about the possible copyright violations and appropriate action can be taken. In some embodiments, the infringing live content streams and/or on-demand content item posted by the unauthorized broadcaster is automatically made inaccessible through the social networking system.

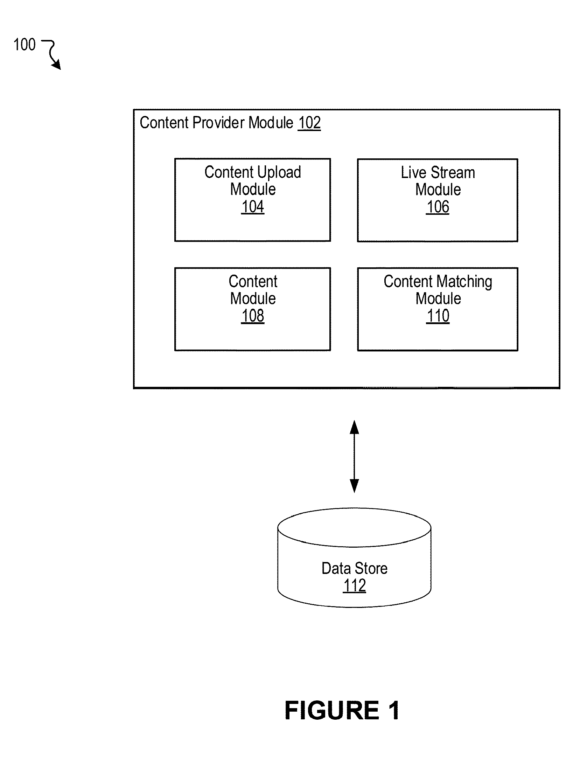

**FIGURE 1** illustrates an example system 100 including an example content provider module 102 configured to provide access to various content items, according to an embodiment of the present disclosure. As shown in the example of **FIGURE 1****,** the content provider module 102 can include a content upload module 104. a live stream module 106, a content module 108, and a content matching module 110. In some instances, the example system 100 can include at least one data store 112. The components (e.g., modules, elements, etc.) shown in this figure and all figures herein are exemplary only, and other implementations may include additional, fewer, integrated, or different components. Some components may not be shown so as not to obscure relevant details.

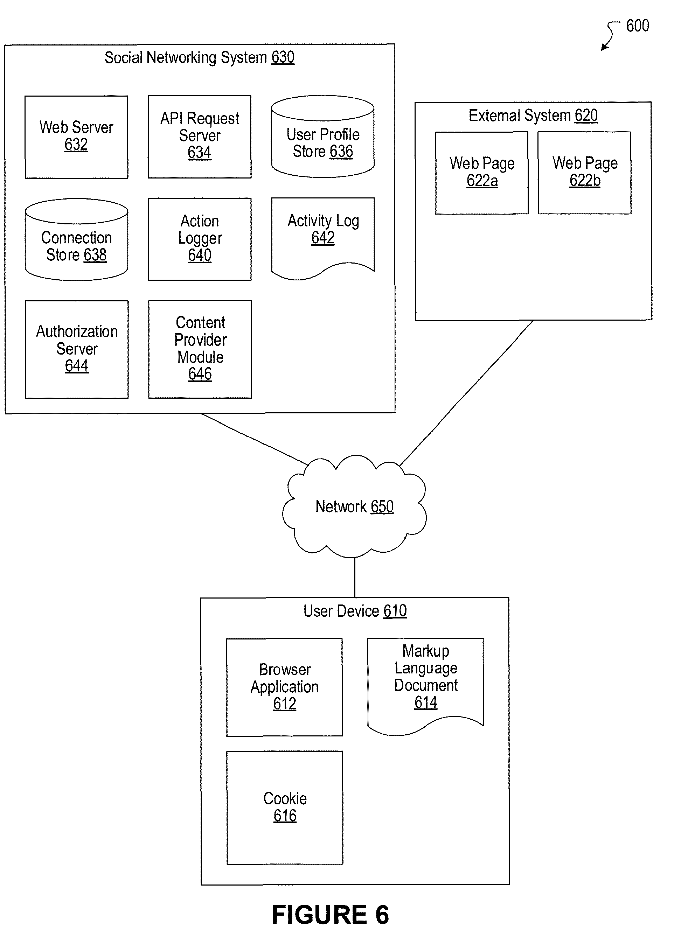

In some embodiments, the content provider module 102 can be implemented, in part or in whole, as software, hardware, or any combination thereof. In general, a module as discussed herein can be associated with software, hardware, or any combination thereof. In some implementations, one or more functions, tasks, and/or operations of modules can be carried out or performed by software routines, software processes, hardware, and/or any combination thereof. In some cases, the content provider module 102 can be implemented, in part or in whole, as software running on one or more computing devices or systems, such as on a user or client computing device. In one example, the content provider module 102 or at least a portion thereof can be implemented as or within an application (e.g., app), a program, or an applet, etc., running on a user computing device or a client computing system, such as the user device 610 of **FIGURE 6****.** In another example, the content provider module 102 or at least a portion thereof can be implemented using one or more computing devices or systems that include one or more servers, such as network servers or cloud servers. In some instances, the content provider module 102 can, in part or in whole, be implemented within or configured to operate in conjunction with a social networking system (or service), such as the social networking system 630 of **FIGURE 6****.**

The content provider module 102 can be configured to communicate and/or operate with the at least one data store 112, as shown in the example system 100. The at least one data store 112 can be configured to store and maintain various types of data. For example, the data store 112 can store information describing various content that is being streamed live through the social networking system or content items that have been posted by users of the social networking system. Such information can include, for example, fingerprints (e.g., hash codes) that were generated for live content streams and for on-demand content items. In some implementations, the at least one data store 112 can store information associated with the social networking system (e.g., the social networking system 630 of **FIGURE 6**). The information associated with the social networking system can include data about users, social connections, social interactions, locations, geo-fenced areas, maps, places, events, pages, groups, posts, communications, content, feeds, account settings, privacy settings, a social graph, and various other types of data. In some implementations, the at least one data store 112 can store information associated with users, such as user identifiers, user information, profile information, user specified settings, content produced or posted by users, and various other types of user data.

The content provider module 102 can be configured to provide users with access to content items that are posted through a social networking system. For example, a user can interact with an interface that is provided by a software application (e.g., a social networking application) running on a computing device of the user. This interface can include an option for posting, or uploading, content items to the social networking system. When posting a content item, the content upload module 104 can be utilized to communicate data describing the content item from the computing device to the social networking system. Such content items may include text, images, audio, and videos, for example. The social networking system can then provide the content item through the social networking system including, for example, in one or more news feeds. In some embodiments, the interface can also include an option for live streaming content items through the social networking system. When initiating a live content stream, the live stream module 106 can be utilized to communicate data describing the content to be streamed live from the computing device to the social networking system. The live stream module 106 can utilize any generally known techniques that allow for live streaming of content including, for example, the Real Time Messaging Protocol (RTMP).

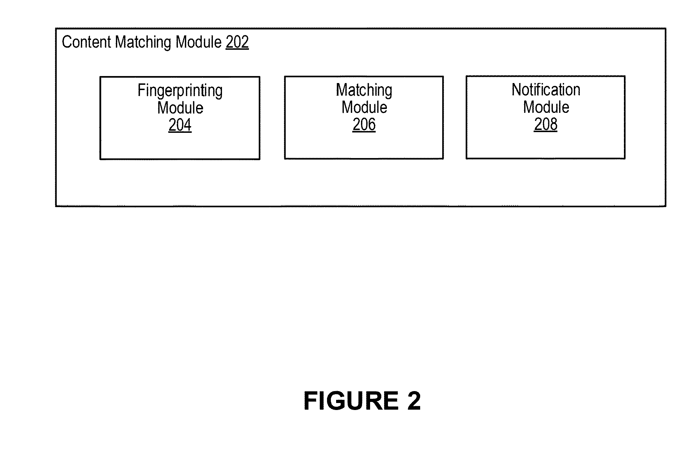

The interface provided by the software application can also be used to access posted content items, for example, using the content module 108. For example, the content module 108 can include content items in a user's news feed. Such content items may include on-demand content items as well as content that is being streamed live. In this example, the user can access content items while browsing the news feed. In another example, the user can access content items by searching, through the interface, for a content item, for the user that posted a content item, and/or using search terms that correspond to a content item. In one example, the user may select an option to view a live content stream and, in response, the social networking system can send data corresponding to the live content stream to a computing device of the user. In this example, the social networking system can continue sending data corresponding to the live content stream until, for example, the publisher of the live content stream discontinues streaming or if the user selects an option to discontinue playback of the live content stream. The content matching module 110 can be configured to identify copyright infringement in content items that are being streamed live or are available on-demand through the social networking system. More details regarding the content matching module 110 will be provided below with reference to **FIGURE 2****.**

**FIGURE 2** illustrates an example of a content matching module 202, according to an embodiment of the present disclosure. In some embodiments, the content matching module 110 of **FIGURE 1** can be implemented as the content matching module 202. As shown in **FIGURE 2****,** the content matching module 202 can include a fingerprinting module 204, a matching module 206, and a notification module 208.

In various embodiments, the fingerprinting module 204 is configured to determine, or obtain, respective fingerprints for content items. For example, a set of fingerprints for a content item may be determined as the content item is being streamed live through the social networking system. In another example, a set of fingerprints can be determined for a content item after the content item is uploaded to the social networking system. In some embodiments, a publisher that is live streaming or uploading a content item may select an option to indicate that the content item is copyrighted. In such embodiments, the live content stream or uploaded content item can be fingerprinted and stored, for example, in a reference database (e.g., the data store 112 of **FIGURE 1**), in response to the option being selected. The fingerprints stored in this reference database can be used to determine whether other content items that are available through the social networking system, either as live streams or videos on-demand, are infringing on copyrighted content.

In some embodiments, the fingerprinting module 204 can obtain fingerprints for content items from one or more fingerprinting services that are each configured to determine fingerprints using one or more techniques. Such fingerprints may be determined, for example, using video data corresponding to the content item, audio data corresponding to the content item, or both. For example, an audio fingerprinting service may be used to determine one or more audio fingerprints for content items being streamed live or for up-loaded content items. In general, the audio fingerprint can be determined based on one or more audio signals that correspond to the content while taking into account any perceptual characteristics of the audio signal(s). One example approach for generating audio fingerprints is based on discrete cosine transform (DCT) as described in U.S. Application No. 14/153,404, filed on January 13, 2014, and entitled "Detecting distorted audio signals based on audio fingerprinting," which is incorporated by reference herein in its entirety. Similarly, in some embodiments, a video fingerprinting service may be used to determine one or more video fingerprints for content items being streamed live or for uploaded content items. In one example, a video fingerprint for the uploaded content item can be determined based on one or more video signals that correspond to the content item. The video fingerprint can be determined by analyzing visual features in the content item including, for example, key frame analysis, color, changes in the video across frames, and motion changes (e.g., optical flow) during video sequences. In some embodiments, the fingerprinting module 204 can be configured to obtain a video and/or audio fingerprint for some, or all, of the frames (or images) of a content item. In one example, the fingerprinting module 204 can obtain a respective video and/or audio fingerprint for each frame in the content item. In another example, the fingerprinting module 204 can obtain respective video and/or audio fingerprints for frames at a specified rate (e.g., one frame per second). In some embodiments, the fingerprint is a similarity-preserving hash code that provides a compact representation of a video and/or audio frame corresponding to a content item. In such embodiments, a match between a frame from a first content item and a frame from a second content item can be determined by comparing the respective video fingerprints of the two frames, the respective audio fingerprints of the two frames, or both.

In various embodiments, the matching module 206 is configured to determine a measure of relatedness between content items. Such measurements can be used to determine whether a live content stream matches, in whole or in part, portions of another live content stream, portions of content that were recently streamed live, or portions of any videos that are available on-demand through the social networking system. For example, the matching module 206 can determine that one or more fingerprints of a copyrighted live stream match one or more fingerprints of a candidate live stream. In some embodiments, the matching module 206 can determine one or more longest sequences of matching video and/or audio frames between the copyrighted live stream and the candidate live stream. In some embodiments, the matching module 206 determines, or obtains, a respective time duration for each of these sequences. For example, the matching module 206 can determine that a sequence of matching frames between the copyrighted live stream and the candidate live stream has a duration of 25 seconds. The matching module 206 can also determine, or obtain, a respective score that measures how well the candidate content item matches the copyrighted content item for each of the matching sequences. The score for a matching sequence can be higher when the video and/or audio frames of the candidate live stream closely match the copyrighted live stream and lower when the match is weaker, for example, due to distortions in the candidate live stream (e.g., poor video and/or audio quality, camera shaking or rotations in the feed, etc.). In some embodiments, such longest sequences of matching frames can be determined by processing the candidate live stream in segments. For example, the matching module 206 can process the candidate live stream in segments of a set duration (e.g., 2, 3, 4, 5-second segments). In this example, the respective fingerprints corresponding to each segment of the candidate live stream can be evaluated with respect to the copyrighted live stream to determine the matching sequences. If any sequences of matching frames satisfy at least a threshold time duration (e.g., n millisecond(s), second(s), minute(s), etc.), then the candidate live stream can be identified as a potential copyright infringement of the copyrighted live stream.

The notification module 208 can be configured to take various actions in response to any copyright violations, potential or otherwise. For example, upon determining a threshold match between the copyrighted live stream and the candidate live stream, the notification module 208 can notify the broadcaster of the candidate live stream of the potential copyright infringement. In some embodiments, the broadcaster has the option to end the candidate live stream or to continue the live stream. In such embodiments, by continuing the live stream, the broadcaster is asserting its rights to stream the candidate live stream. In some cases, if the broadcaster ends the candidate live stream, then no action is needed from the publisher and, depending on the implementation, the publisher may or may not be notified of the broadcaster's live stream. However, if the broadcaster decides to continue the candidate live stream, then the notification module 208 can provide the publisher with information about the matching content. In some embodiments, the publisher can access an interface provided by the notification module 208 that identifies the respective portions of the candidate live stream at which a potential copyright infringement was found. The publisher can access the interface to playback the matching portions of the content items. The publisher can also access the interface to flag live streams and/or uploaded content items as a copyright violations, to take no action (e.g., due to fair use of the content item), or to grant authorization for use of the copyrighted portions, for example. In some embodiments, any live streams and/or uploaded content items that were flagged as infringements of the publisher's copyrighted content are made inaccessible to users through the social networking system. In some embodiments, the publisher can create match rules that specify various criteria to be satisfied before the publisher is notified of a match. For example, in some embodiments, the publisher can specify a match type (e.g., audio, video, video only, audio only, or both audio and video). In this example, the publisher is notified of a match provided the match satisfies the match type. In some embodiments, the publisher can specify a geographic region (e.g., specific cities, states, regions, countries, worldwide, etc.). In this example, the publisher is notified of a match provided the matching content originated from, or was broadcasted from, the specified geographic region. In some embodiments, the publisher can specify one or more match conditions and actions to be performed should those conditions be satisfied. One example match condition involves setting a match time duration. In this example, the publisher can be notified if the time length of matching content satisfies (e.g., is greater than, equal to, or less than) the match time duration. In some embodiments, the publisher can specify a match length (e.g., number of frames) and be notified if the matching content satisfies the specified match length. In some embodiments, the publisher can specify one or more approved, or whitelisted, users and/or pages that are permitted to use the publisher's copyrighted content. In such embodiments, the publisher is notified if the matching content was posted by any user or page that is not approved or whitelisted. In some embodiments, the publisher can blacklist users and/or pages and be notified if the matching content originates from the blacklisted users and/or is broadcasted through blacklisted pages. In some embodiments, the publisher can specify one or more actions to be performed when match rules is satisfied. For example, the publisher can specify that no action should be taken against a match that satisfies a certain rule or rules. In another example, the publisher can indicate that a notification, or report, should be sent to the publisher when a match satisfies a certain rule or rules. The match rules and conditions described above are provided as examples and, in some embodiments, the publisher can create match rules using other constraints. In general, any of the example match rules and/or conditions described above can be combined with other rules and/or conditions.

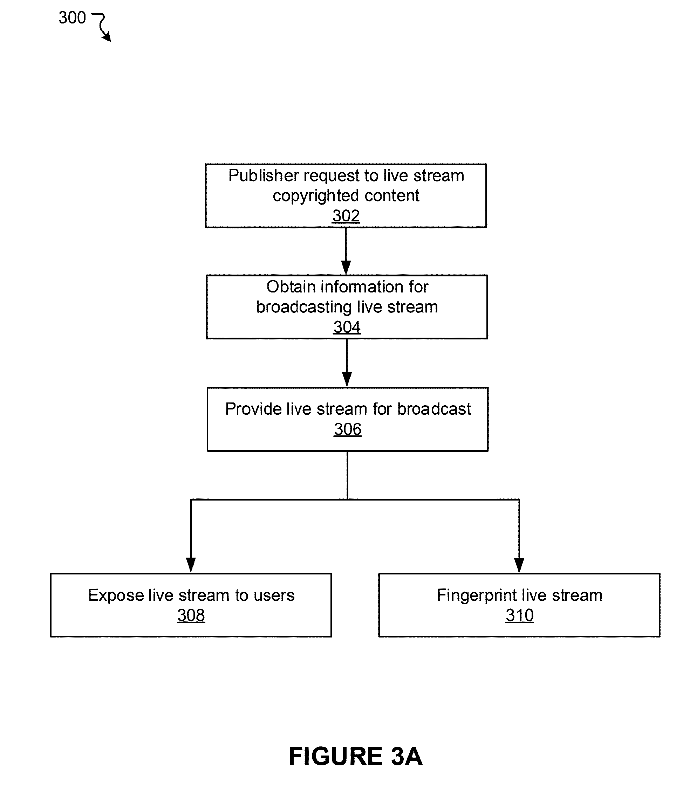

**FIGURE 3A** illustrates an example process 300 for live streaming content through a social networking system, according to various embodiments of the present disclosure. It should be appreciated that there can be additional, fewer, or alternative steps performed in similar or alternative orders, or in parallel, within the scope of the various embodiments discussed herein unless otherwise stated.

At block 302, a publisher operating a computing device can send a request to the content provider (e.g., social networking system) to initiate a live content stream. In some embodiments, the publisher can request that the content to be live streamed be protected as copyrighted material. In various embodiments, the content provider can generate one or more Uniform Resource Locators (URLs) and channel(s) to which the content will be streamed. These URL(s) can include information that instructs the content provider to generate and store fingerprints of the live content stream, for example, in a reference database, for copyright enforcement purposes. In some embodiments, a channel is a continuous stream that can broadcast different live streams at different times. As mentioned, any generally known techniques that allow for live streaming of content can be utilized including, for example, the Real Time Messaging Protocol (RTMP). Thus, in some embodiments, the content provider generates an RTMP URL to which the publisher will stream the content. At block 304, the publisher obtains information for broadcasting the live content stream. Such information can include, for example, any URL(s) and/or channel(s) that were generated by the content provider. At block 306, the publisher can instruct the computing device to send, or provide, the live content stream to the content provider for broadcasting through the URL(s) and/or channel(s) obtained from the content provider. At block 308, the live content stream is exposed for access to users of the content provider. At block 310, one or more fingerprinting services are utilized to generate and store fingerprints of the live content stream. As mentioned, these fingerprints may be video fingerprints and/or audio fingerprints that can be generated as the live content stream is received.

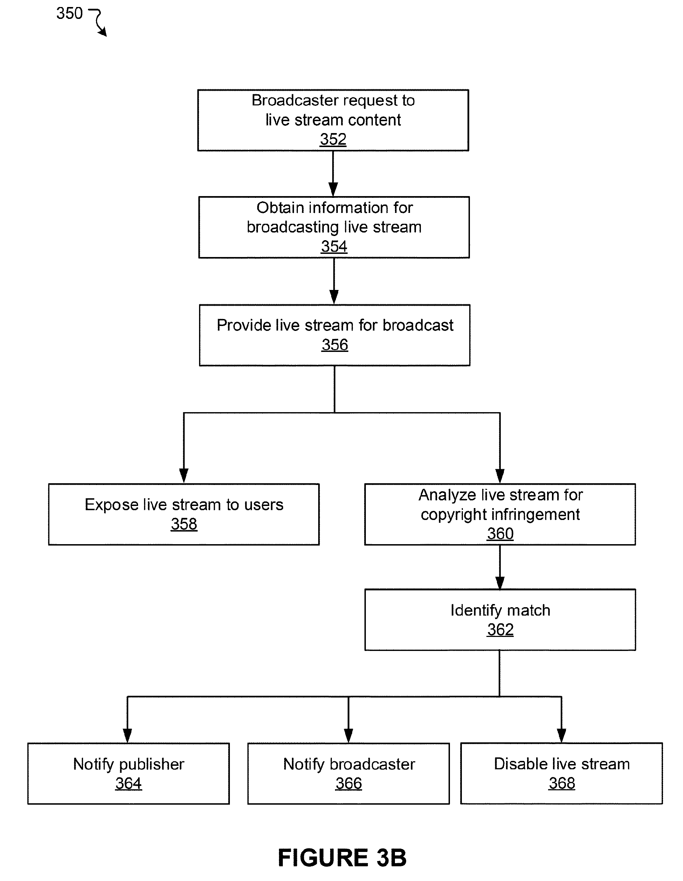

**FIGURE 3B** illustrates an example process 350 for identifying content that matches a live content stream in a social networking system, according to various embodiments of the present disclosure. It should be appreciated that there can be additional, fewer, or alternative steps performed in similar or alternative orders, or in parallel, within the scope of the various embodiments discussed herein unless otherwise stated.

At block 352, a broadcaster operating a computing device can send a request to the content provider (e.g., social networking system) to initiate a live content stream. In various embodiments, the content provider can generate one or more Uniform Resource Locators (URLs) and channel(s) to which the content will be streamed. At block 354, the broadcaster obtains information for broadcasting the live content stream. At block 356, the broadcaster can instruct a computing device to send, or provide, the live content stream to the content provider for broadcasting through the URL(s) and/or channel(s) obtained from the content provider. At block 358, the live content stream is exposed for access to users of the content provider. At block 360, one or more fingerprinting services are utilized to analyze the broadcaster's live content stream for copyright infringement. For example, one or more fingerprinting services can generate fingerprints for the broadcaster's live content stream and use these fingerprints to determine whether the broadcaster's live content stream matches any copyrighted live streams and/or on-demand content items, as described above. At block 362, the content provider determines that at least a portion of the broadcaster's live content stream is a threshold match against copyrighted content (e.g., copyrighted live streams and/or on-demand content items). At block 364, the content provider can send a notification to the publisher of the copyrighted content that was potentially infringed. In some embodiments, the publisher can access an interface that identifies the matching portion(s) in the broadcaster's live stream. In such embodiments, the publisher can use the interface to perform various actions, as described above. At block 366, the content provider can send a notification to the broadcaster of the live content stream that was found to be potentially infringing copyrighted content, as described above. At block 368, the content provider can disable, or make inaccessible, the broadcaster's live content stream. Such action may be taken when certain requirements are satisfied, for example. In some embodiments, the broadcaster's live content stream is disabled when the matching content satisfies a threshold (e.g., time duration, number of frames, etc.). For example, if the broadcaster's live content stream was determined to include infringing content for more than a threshold amount of time (e.g., 30 seconds, 30 minutes, etc.), then the content provider can automatically disable the broadcaster's live content stream from being broadcasted through the content provider.

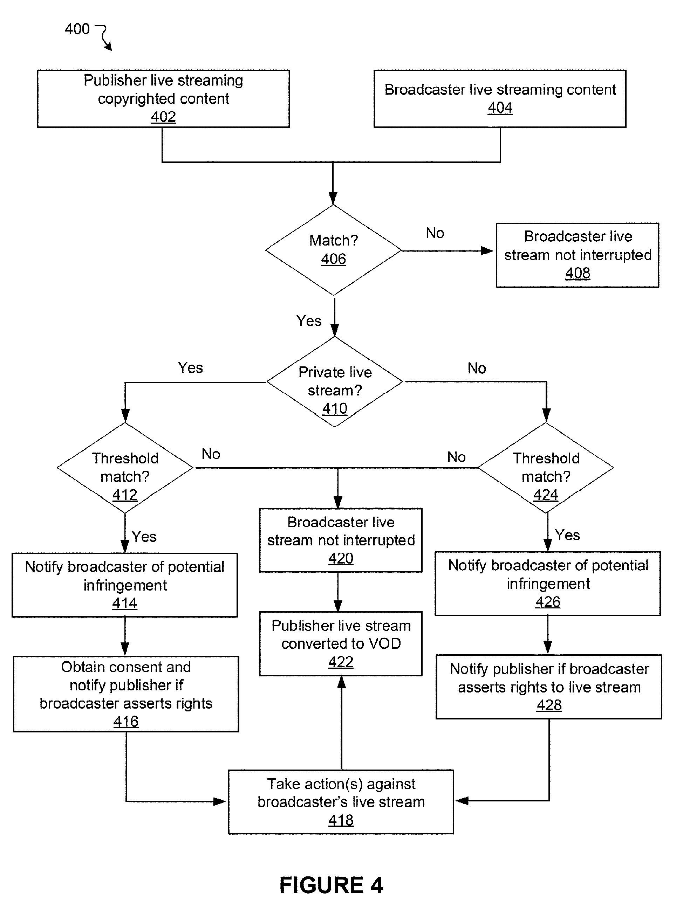

**FIGURE 4** illustrates an example process 400 for identifying and managing matching content, according to various embodiments of the present disclosure. It should be appreciated that there can be additional, fewer, or alternative steps performed in similar or alternative orders, or in parallel, within the scope of the various embodiments discussed herein unless otherwise stated.

At block 402, a publisher is live streaming copyrighted content through a content provider (e.g., social networking system). At block 404, a broadcaster is also live streaming content through the content provider. At block 406, a determination is made whether any portion of the broadcaster's live content stream matches the publisher's live content stream. In various embodiments, the match can be determined despite any lag or delay between the publisher's live stream and the broadcaster's live stream. For example, the match can be determined if the broadcaster's live stream is lagging behind the publisher's live stream or if the publisher's live stream is lagging behind the broadcaster's live stream. In some embodiments, the publisher's live stream is analyzed to ensure that content in the live stream has not already been copyrighted by a different publisher. In some embodiments, the content provider can detect and remove any ads and/or commercials that are included in the publisher's live stream and/or the broadcaster's live stream. Such filtering can help reduce matches that are false positives.

At block 408, if no match exists, then the broadcaster's live stream continues broadcasting through the content provider. If a match exists, at block 410, a determination is made whether the broadcaster's live stream is being privately shared through the content provider. For example, the broadcaster's live stream may be available publicly to users of the content provider. In some instances, the broadcaster may opt to only share the live stream privately with selected users of the content provider. If the broadcaster's live stream is being shared privately, at block 412, a determination is made whether the matching content satisfies a threshold. If a threshold match is not determined, at block 420, the broadcaster's live stream is allowed to continue broadcasting through the content provider. In contrast, if a threshold match is determined, at block 414, the broadcaster is sent a notification indicating the potential copyright infringement of the publisher's live content stream. If the broadcaster ends its live stream, then no further action is needed and the publisher of the live content stream is not notified of the broadcaster's live stream.

In some instances, the broadcaster may assert rights to the copyrighted material and continue its live stream. In such instances, at block 416, the content provider requests the broadcaster's consent to share the broadcaster's live stream and/or the matching content with the publisher (i.e., copyright holder) of the live content stream. In some embodiments, if the broadcaster declines to give consent, then the content provider can automatically disable the broadcaster's live content stream. If the broadcaster provides consent, the content provider can notify the publisher of the matching content. In some embodiments, any information identifying the broadcaster is anonymized in the notification to the publisher. The publisher can take various actions against the broadcaster's live stream, as described above. At block 418, the content provider can take any actions against the broadcaster that were specified by the publisher. At block 422, once the broadcast of the publisher's live content stream has completed, the content provider can convert the live stream into a video on-demand format so that the live stream can be accessed by users of the content provider on-demand. In some embodiments, after the publisher's live content stream has been converted into video on-demand format, the content provider can analyze the publisher's content against other on-demand content items for purposes of identifying other copyright violations.

If the broadcaster's live stream is being shared publically, then at block 424, a determination is made whether the matching content satisfies a threshold. If a threshold match is not determined, at block 420, the broadcaster's live stream is allowed to continue broadcasting through the content provider. In contrast, if a threshold match is determined, at block 426, the broadcaster is sent a notification indicating the potential copyright infringement of the publisher's live content stream. If the broadcaster ends its live stream, then no further action is needed and the publisher of the live content stream is not notified of the broadcaster's live stream. In some instances, the broadcaster may assert rights to the copyrighted material and continue its live stream. In such instances, at block 428, the publisher of the live stream is notified of the matching content in the broadcaster's live stream. In response, the publisher can take various actions against the broadcaster's live stream, as described above. In some embodiments, any information identifying the broadcaster is anonymized in the notification to the publisher. At block 418, the content provider can take any actions against the broadcaster that were specified by the publisher. At block 422, once the broadcast of the publisher's live content stream has completed, the content provider can convert the live stream into a video on-demand format so that the live stream can be accessed by users of the content provider on-demand.

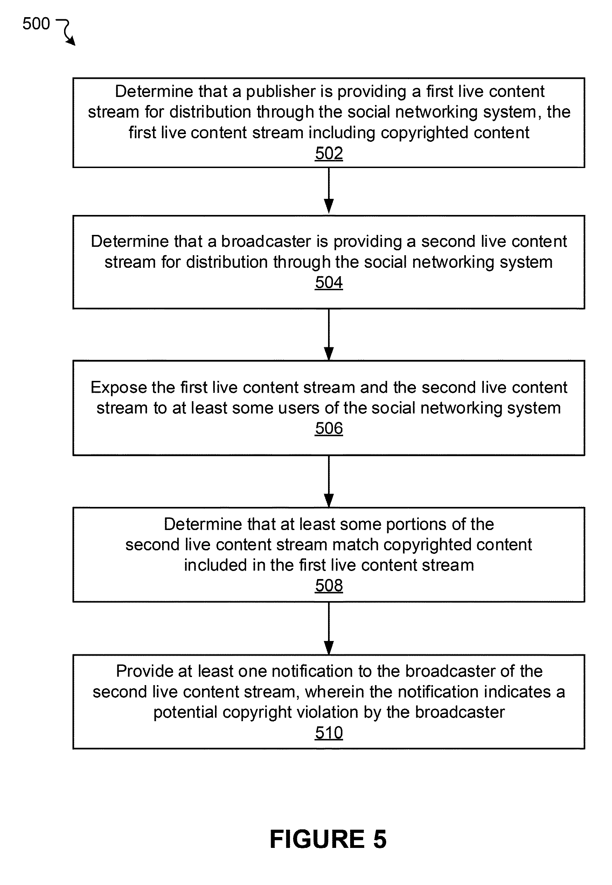

**FIGURE 5** illustrates an example process 500 for managing matches between content items, according to various embodiments of the present disclosure. It should be appreciated that there can be additional, fewer, or alternative steps performed in similar or alternative orders, or in parallel, within the scope of the various embodiments discussed herein unless otherwise stated.

At block 502, a determination is made that a publisher is providing a first live content stream for distribution through the social networking system, the first live content stream including copyrighted content. At block 504, a determination is made that a broadcaster is providing a second live content stream for distribution through the social networking system. At block 506, the first live content stream and the second live content stream are exposed to at least some users of the social networking system. At block 508, while the first live content stream and the second live content stream are being distributed through the social networking system, a determination is made that at least some portions of the second live content stream match copyrighted content included in the first live content stream. At block 510, at least one notification is provided to the broadcaster of the second live content stream, wherein the notification indicates a potential copyright violation by the broadcaster.

It is contemplated that there can be many other uses, applications, and/or variations associated with the various embodiments of the present disclosure. For example, in some cases, user can choose whether or not to opt-in to utilize the disclosed technology. The disclosed technology can also ensure that various privacy settings and preferences are maintained and can prevent private information from being divulged. In another example, various embodiments of the present disclosure can learn, improve, and/or be refined over time.

### SOCIAL NETWORKING SYSTEM - EXAMPLE IMPLEMENTATION

**FIGURE 6** illustrates a network diagram of an example system 600 that can be utilized in various scenarios, in accordance with an embodiment of the present disclosure. The system 600 includes one or more user devices 610, one or more external systems 620, a social networking system (or service) 630, and a network 650. In an embodiment, the social networking service, provider, and/or system discussed in connection with the embodiments described above may be implemented as the social networking system 630. For purposes of illustration, the embodiment of the system 600, shown by **FIGURE 6****,** includes a single external system 620 and a single user device 610. However, in other embodiments, the system 600 may include more user devices 610 and/or more external systems 620. In certain embodiments, the social networking system 630 is operated by a social network provider, whereas the external systems 620 are separate from the social networking system 630 in that they may be operated by different entities. In various embodiments, however, the social networking system 630 and the external systems 620 operate in conjunction to provide social networking services to users (or members) of the social networking system 630. In this sense, the social networking system 630 provides a platform or backbone, which other systems, such as external systems 620, may use to provide social networking services and functionalities to users across the Internet.

The user device 610 comprises one or more computing devices (or systems) that can receive input from a user and transmit and receive data via the network 650. In one embodiment, the user device 610 is a conventional computer system executing, for example, a Microsoft Windows compatible operating system (OS), Apple OS X, and/or a Linux distribution. In another embodiment, the user device 610 can be a computing device or a device having computer functionality, such as a smart-phone, a tablet, a personal digital assistant (PDA), a mobile telephone, a laptop computer, a wearable device (e.g., a pair of glasses, a watch, a bracelet, etc.), a camera, an appliance, etc. The user device 610 is configured to communicate via the network 650. The user device 610 can execute an application, for example, a browser application that allows a user of the user device 610 to interact with the social networking system 630. In another embodiment, the user device 610 interacts with the social networking system 630 through an application programming interface (API) provided by the native operating system of the user device 610, such as iOS and ANDROID. The user device 610 is configured to communicate with the external system 620 and the social networking system 630 via the network 650, which may comprise any combination of local area and/or wide area networks, using wired and/or wireless communication systems.

In one embodiment, the network 650 uses standard communications technologies and protocols. Thus, the network 650 can include links using technologies such as Ethernet, 802.11, worldwide interoperability for microwave access (WiMAX), 3G, 4G, CDMA, GSM, LTE, digital subscriber line (DSL), etc. Similarly, the networking protocols used on the network 650 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), and the like. The data exchanged over the network 650 can be represented using technologies and/or formats including hypertext markup language (HTML) and extensible markup language (XML). In addition, all or some links can be encrypted using conventional encryption technologies such as secure sockets layer (SSL), transport layer security (TLS), and Internet Protocol security (IPsec).

In one embodiment, the user device 610 may display content from the external system 620 and/or from the social networking system 630 by processing a markup language document 614 received from the external system 620 and from the social networking system 630 using a browser application 612. The markup language document 614 identifies content and one or more instructions describing formatting or presentation of the content. By executing the instructions included in the markup language document 614, the browser application 612 displays the identified content using the format or presentation described by the markup language document 614. For example, the markup language document 614 includes instructions for generating and displaying a web page having multiple frames that include text and/or image data retrieved from the external system 620 and the social networking system 630. In various embodiments, the markup language document 614 comprises a data file including extensible markup language (XML) data, extensible hypertext markup language (XHTML) data, or other markup language data. Additionally, the markup language document 614 may include JavaScript Object Notation (JSON) data, JSON with padding (JSONP), and JavaScript data to facilitate data-interchange between the external system 620 and the user device 610. The browser application 612 on the user device 610 may use a JavaScript compiler to decode the markup language document 614.

The markup language document 614 may also include, or link to, applications or application frameworks such as FLASH™ or Unity™ applications, the Silverlight™ application framework, etc.

In one embodiment, the user device 610 also includes one or more cookies 616 including data indicating whether a user of the user device 610 is logged into the social networking system 630, which may enable modification of the data communicated from the social networking system 630 to the user device 610.

The external system 620 includes one or more web servers that include one or more web pages 622a, 622b, which are communicated to the user device 610 using the network 650. The external system 620 is separate from the social networking system 630. For example, the external system 620 is associated with a first domain, while the social networking system 630 is associated with a separate social networking domain. Web pages 622a, 622b, included in the external system 620, comprise markup language documents 614 identifying content and including instructions specifying formatting or presentation of the identified content. As discussed previously, it should be appreciated that there can be many variations or other possibilities.

The social networking system 630 includes one or more computing devices for a social network, including a plurality of users, and providing users of the social network with the ability to communicate and interact with other users of the social network. In some instances, the social network can be represented by a graph, i.e., a data structure including edges and nodes. Other data structures can also be used to represent the social network, including but not limited to databases, objects, classes, meta elements, files, or any other data structure. The social networking system 630 may be administered, managed, or controlled by an operator. The operator of the social networking system 630 may be a human being, an automated application, or a series of applications for managing content, regulating policies, and collecting usage metrics within the social networking system 630. Any type of operator may be used.

Users may join the social networking system 630 and then add connections to any number of other users of the social networking system 630 to whom they desire to be connected. As used herein, the term "friend" refers to any other user of the social networking system 630 to whom a user has formed a connection, association, or relationship via the social networking system 630. For example, in an embodiment, if users in the social networking system 630 are represented as nodes in the social graph, the term "friend" can refer to an edge formed between and directly connecting two user nodes.

Connections may be added explicitly by a user or may be automatically created by the social networking system 630 based on common characteristics of the users (e.g., users who are alumni of the same educational institution). For example, a first user specifically selects a particular other user to be a friend. Connections in the social networking system 630 are usually in both directions, but need not be, so the terms "user" and "friend" depend on the frame of reference. Connections between users of the social networking system 630 are usually bilateral ("two-way"), or "mutual," but connections may also be unilateral, or "one-way." For example, if Bob and Joe are both users of the social networking system 630 and connected to each other, Bob and Joe are each other's connections. If, on the other hand, Bob wishes to connect to Joe to view data communicated to the social networking system 630 by Joe, but Joe does not wish to form a mutual connection, a unilateral connection may be established. The connection between users may be a direct connection; however, some embodiments of the social networking system 630 allow the connection to be indirect via one or more levels of connections or degrees of separation.

In addition to establishing and maintaining connections between users and allowing interactions between users, the social networking system 630 provides users with the ability to take actions on various types of items supported by the social networking system 630. These items may include groups or networks (i.e., social networks of people, entities, and concepts) to which users of the social networking system 630 may belong, events or calendar entries in which a user might be interested, computer-based applications that a user may use via the social networking system 630, transactions that allow users to buy or sell items via services provided by or through the social networking system 630, and interactions with advertisements that a user may perform on or off the social networking system 630. These are just a few examples of the items upon which a user may act on the social networking system 630, and many others are possible. A user may interact with anything that is capable of being represented in the social networking system 630 or in the external system 620, separate from the social networking system 630, or coupled to the social networking system 630 via the network 650.

The social networking system 630 is also capable of linking a variety of entities. For example, the social networking system 630 enables users to interact with each other as well as external systems 620 or other entities through an API, a web service, or other communication channels. The social networking system 630 generates and maintains the "social graph" comprising a plurality of nodes interconnected by a plurality of edges. Each node in the social graph may represent an entity that can act on another node and/or that can be acted on by another node. The social graph may include various types of nodes. Examples of types of nodes include users, non-person entities, content items, web pages, groups, activities, messages, concepts, and any other things that can be represented by an object in the social networking system 630. An edge between two nodes in the social graph may represent a particular kind of connection, or association, between the two nodes, which may result from node relationships or from an action that was performed by one of the nodes on the other node. In some cases, the edges between nodes can be weighted. The weight of an edge can represent an attribute associated with the edge, such as a strength of the connection or association between nodes. Different types of edges can be provided with different weights. For example, an edge created when one user "likes" another user may be given one weight, while an edge created when a user befriends another user may be given a different weight.

As an example, when a first user identifies a second user as a friend, an edge in the social graph is generated connecting a node representing the first user and a second node representing the second user. As various nodes relate or interact with each other, the social networking system 630 modifies edges connecting the various nodes to reflect the relationships and interactions.

The social networking system 630 also includes user-generated content, which enhances a user's interactions with the social networking system 630. User-generated content may include anything a user can add, upload, send, or "post" to the social networking system 630. For example, a user communicates posts to the social networking system 630 from a user device 610. Posts may include data such as status updates or other textual data, location information, images such as photos, videos, links, music or other similar data and/or media. Content may also be added to the social networking system 630 by a third party. Content "items" are represented as objects in the social networking system 630. In this way, users of the social networking system 630 are encouraged to communicate with each other by posting text and content items of various types of media through various communication channels. Such communication increases the interaction of users with each other and increases the frequency with which users interact with the social networking system 630.

The social networking system 630 includes a web server 632, an API request server 634, a user profile store 636, a connection store 638, an action logger 640, an activity log 642, and an authorization server 644. In an embodiment of the invention, the social networking system 630 may include additional, fewer, or different components for various applications. Other components, such as network interfaces, security mechanisms, load balancers, failover servers, management and network operations consoles, and the like are not shown so as to not obscure the details of the system.

The user profile store 636 maintains information about user accounts, including biographic, demographic, and other types of descriptive information, such as work experience, educational history, hobbies or preferences, location, and the like that has been declared by users or inferred by the social networking system 630. This information is stored in the user profile store 636 such that each user is uniquely identified. The social networking system 630 also stores data describing one or more connections between different users in the connection store 638. The connection information may indicate users who have similar or common work experience, group memberships, hobbies, or educational history. Additionally, the social networking system 630 includes user-defined connections between different users, allowing users to specify their relationships with other users. For example, user-defined connections allow users to generate relationships with other users that parallel the users' real-life relationships, such as friends, co-workers, partners, and so forth. Users may select from predefined types of connections, or define their own connection types as needed. Connections with other nodes in the social networking system 630, such as non-person entities, buckets, cluster centers, images, interests, pages, external systems, concepts, and the like are also stored in the connection store 638.

The social networking system 630 maintains data about objects with which a user may interact. To maintain this data, the user profile store 636 and the connection store 638 store instances of the corresponding type of objects maintained by the social networking system 630. Each object type has information fields that are suitable for storing information appropriate to the type of object. For example, the user profile store 636 contains data structures with fields suitable for describing a user's account and information related to a user's account. When a new object of a particular type is created, the social networking system 630 initializes a new data structure of the corresponding type, assigns a unique object identifier to it, and begins to add data to the object as needed. This might occur, for example, when a user becomes a user of the social networking system 630, the social networking system 630 generates a new instance of a user profile in the user profile store 636, assigns a unique identifier to the user account, and begins to populate the fields of the user account with information provided by the user.

The connection store 638 includes data structures suitable for describing a user's connections to other users, connections to external systems 620 or connections to other entities. The connection store 638 may also associate a connection type with a user's connections, which may be used in conjunction with the user's privacy setting to regulate access to information about the user. In an embodiment of the invention, the user profile store 636 and the connection store 638 may be implemented as a federated database.

Data stored in the connection store 638, the user profile store 636, and the activity log 642 enables the social networking system 630 to generate the social graph that uses nodes to identify various objects and edges connecting nodes to identify relationships between different objects. For example, if a first user establishes a connection with a second user in the social networking system 630, user accounts of the first user and the second user from the user profile store 636 may act as nodes in the social graph. The connection between the first user and the second user stored by the connection store 638 is an edge between the nodes associated with the first user and the second user. Continuing this example, the second user may then send the first user a message within the social networking system 630. The action of sending the message, which may be stored, is another edge between the two nodes in the social graph representing the first user and the second user. Additionally, the message itself may be identified and included in the social graph as another node connected to the nodes representing the first user and the second user.

In another example, a first user may tag a second user in an image that is maintained by the social networking system 630 (or, alternatively, in an image maintained by another system outside of the social networking system 630). The image may itself be represented as a node in the social networking system 630. This tagging action may create edges between the first user and the second user as well as create an edge between each of the users and the image, which is also a node in the social graph. In yet another example, if a user confirms attending an event, the user and the event are nodes obtained from the user profile store 636, where the attendance of the event is an edge between the nodes that may be retrieved from the activity log 642. By generating and maintaining the social graph, the social networking system 630 includes data describing many different types of objects and the interactions and connections among those objects, providing a rich source of socially relevant information.

The web server 632 links the social networking system 630 to one or more user devices 610 and/or one or more external systems 620 via the network 650. The web server 632 serves web pages, as well as other web-related content, such as Java, JavaScript, Flash, XML, and so forth. The web server 632 may include a mail server or other messaging functionality for receiving and routing messages between the social networking system 630 and one or more user devices 610. The messages can be instant messages, queued messages (e.g., email), text and SMS messages, or any other suitable messaging format.

The API request server 634 allows one or more external systems 620 and user devices 610 to call access information from the social networking system 630 by calling one or more API functions. The API request server 634 may also allow external systems 620 to send information to the social networking system 630 by calling APIs. The external system 620, in one embodiment, sends an API request to the social networking system 630 via the network 650, and the API request server 634 receives the API request. The API request server 634 processes the request by calling an API associated with the API request to generate an appropriate response, which the API request server 634 communicates to the external system 620 via the network 650. For example, responsive to an API request, the API request server 634 collects data associated with a user, such as the user's connections that have logged into the external system 620, and communicates the collected data to the external system 620. In another embodiment, the user device 610 communicates with the social networking system 630 via APIs in the same manner as external systems 620.

The action logger 640 is capable of receiving communications from the web server 632 about user actions on and/or off the social networking system 630. The action logger 640 populates the activity log 642 with information about user actions, enabling the social networking system 630 to discover various actions taken by its users within the social networking system 630 and outside of the social networking system 630. Any action that a particular user takes with respect to another node on the social networking system 630 may be associated with each user's account, through information maintained in the activity log 642 or in a similar database or other data repository. Examples of actions taken by a user within the social networking system 630 that are identified and stored may include, for example, adding a connection to another user, sending a message to another user, reading a message from another user, viewing content associated with another user, attending an event posted by another user, posting an image, attempting to post an image, or other actions interacting with another user or another object. When a user takes an action within the social networking system 630, the action is recorded in the activity log 642. In one embodiment, the social networking system 630 maintains the activity log 642 as a database of entries. When an action is taken within the social networking system 630, an entry for the action is added to the activity log 642. The activity log 642 may be referred to as an action log.

Additionally, user actions may be associated with concepts and actions that occur within an entity outside of the social networking system 630, such as an external system 620 that is separate from the social networking system 630. For example, the action logger 640 may receive data describing a user's interaction with an external system 620 from the web server 632. In this example, the external system 620 reports a user's interaction according to structured actions and objects in the social graph.

Other examples of actions where a user interacts with an external system 620 include a user expressing an interest in an external system 620 or another entity, a user posting a comment to the social networking system 630 that discusses an external system 620 or a web page 622a within the external system 620, a user posting to the social networking system 630 a Uniform Resource Locator (URL) or other identifier associated with an external system 620, a user attending an event associated with an external system 620, or any other action by a user that is related to an external system 620. Thus, the activity log 642 may include actions describing interactions between a user of the social networking system 630 and an external system 620 that is separate from the social networking system 630.

The authorization server 644 enforces one or more privacy settings of the users of the social networking system 630. A privacy setting of a user determines how particular information associated with a user can be shared. The privacy setting comprises the specification of particular information associated with a user and the specification of the entity or entities with whom the information can be shared. Examples of entities with which information can be shared may include other users, applications, external systems 620, or any entity that can potentially access the information. The information that can be shared by a user comprises user account information, such as profile photos, phone numbers associated with the user, user's connections, actions taken by the user such as adding a connection, changing user profile information, and the like.

The privacy setting specification may be provided at different levels of granularity. For example, the privacy setting may identify specific information to be shared with other users; the privacy setting identifies a work phone number or a specific set of related information, such as, personal information including profile photo, home phone number, and status. Alternatively, the privacy setting may apply to all the information associated with the user. The specification of the set of entities that can access particular information can also be specified at various levels of granularity. Various sets of entities with which information can be shared may include, for example, all friends of the user, all friends of friends, all applications, or all external systems 620. One embodiment allows the specification of the set of entities to comprise an enumeration of entities. For example, the user may provide a list of external systems 620 that are allowed to access certain information. Another embodiment allows the specification to comprise a set of entities along with exceptions that are not allowed to access the information. For example, a user may allow all external systems 620 to access the user's work information, but specify a list of external systems 620 that are not allowed to access the work information. Certain embodiments call the list of exceptions that are not allowed to access certain information a "block list". External systems 620 belonging to a block list specified by a user are blocked from accessing the information specified in the privacy setting. Various combinations of granularity of specification of information, and granularity of specification of entities, with which information is shared are possible. For example, all personal information may be shared with friends whereas all work information may be shared with friends of friends.

The authorization server 644 contains logic to determine if certain information associated with a user can be accessed by a user's friends, external systems 620, and/or other applications and entities. The external system 620 may need authorization from the authorization server 644 to access the user's more private and sensitive information, such as the user's work phone number. Based on the user's privacy settings, the authorization server 644 determines if another user, the external system 620, an application, or another entity is allowed to access information associated with the user, including information about actions taken by the user.

In some embodiments, the social networking system 630 can include a content provider module 646. The content provider module 646 can, for example, be implemented as the content provider module 102 of **FIGURE** 1. As discussed previously, it should be appreciated that there can be many variations or other possibilities.

### HARDWARE IMPLEMENTATION

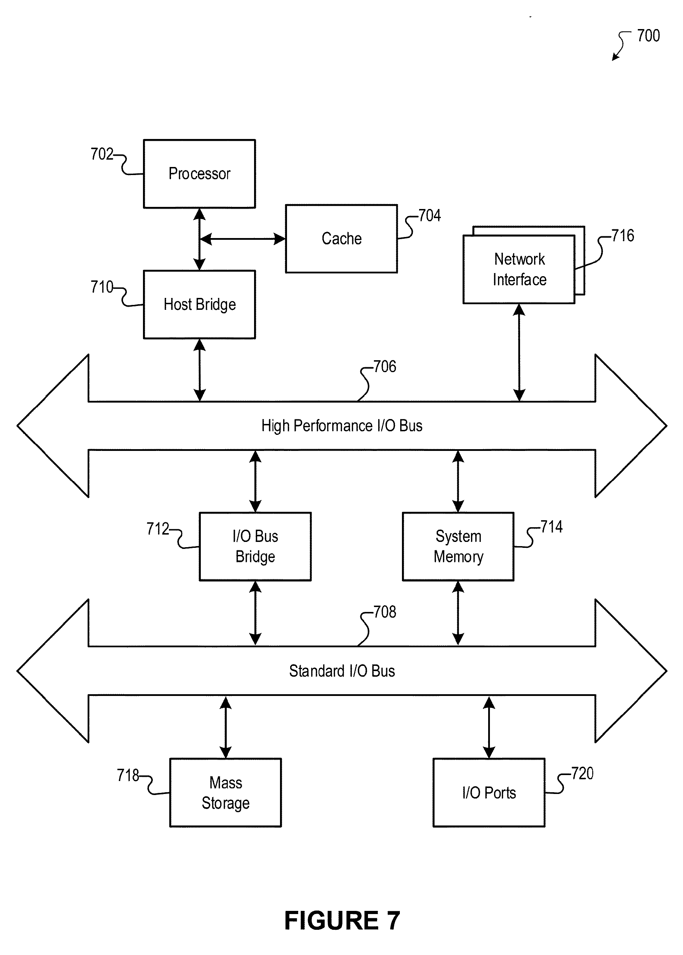

The foregoing processes and features can be implemented by a wide variety of machine and computer system architectures and in a wide variety of network and computing environments. **FIGURE 7** illustrates an example of a computer system 700 that may be used to implement one or more of the embodiments described herein in accordance with an embodiment of the invention. The computer system 700 includes sets of instructions for causing the computer system 700 to perform the processes and features discussed herein. The computer system 700 may be connected (e.g., networked) to other machines. In a networked deployment, the computer system 700 may operate in the capacity of a server machine or a client machine in a client-server network environment, or as a peer machine in a peer-to-peer (or distributed) network environment. In an embodiment of the invention, the computer system 700 may be the social networking system 630, the user device 610, and the external system 720, or a component thereof. In an embodiment of the invention, the computer system 700 may be one server among many that constitutes all or part of the social networking system 630.

The computer system 700 includes a processor 702, a cache 704, and one or more executable modules and drivers, stored on a computer-readable medium, directed to the processes and features described herein. Additionally, the computer system 700 includes a high performance input/output (I/O) bus 706 and a standard I/O bus 708. A host bridge 710 couples processor 702 to high performance I/O bus 706, whereas I/O bus bridge 712 couples the two buses 706 and 708 to each other. A system memory 714 and one or more network interfaces 716 couple to high performance I/O bus 706. The computer system 700 may further include video memory and a display device coupled to the video memory (not shown). Mass storage 718 and I/O ports 720 couple to the standard I/O bus 708. The computer system 700 may optionally include a keyboard and pointing device, a display device, or other input/output devices (not shown) coupled to the standard I/O bus 708. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 700, including the input and output of data to and from software applications (not shown). The operating system provides an interface between the software applications being executed on the system and the hardware components of the system. Any suitable operating system may be used, such as the LINUX Operating System, the Apple Macin-tosh Operating System, available from Apple Computer Inc. of Cupertino, California, UNIX operating systems, Microsoft® Windows® operating systems, BSD operating systems, and the like. Other implementations are possible.

The elements of the computer system 700 are described in greater detail below. In particular, the network interface 716 provides communication between the computer system 700 and any of a wide range of networks, such as an Ethernet (e.g., IEEE 802.3) network, a backplane, etc. The mass storage 718 provides permanent storage for the data and programming instructions to perform the above-described processes and features implemented by the respective computing systems identified above, whereas the system memory 714 (e.g., DRAM) provides temporary storage for the data and programming instructions when executed by the processor 702. The I/O ports 720 may be one or more serial and/or parallel communication ports that provide communication between additional peripheral devices, which may be coupled to the computer system 700.

The computer system 700 may include a variety of system architectures, and various components of the computer system 700 may be rearranged. For example, the cache 704 may be on-chip with processor 702. Alternatively, the cache 704 and the processor 702 may be packed together as a "processor module", with processor 702 being referred to as the "processor core". Furthermore, certain embodiments of the invention may neither require nor include all of the above components. For example, peripheral devices coupled to the standard I/O bus 708 may couple to the high performance I/O bus 706. In addition, in some embodiments, only a single bus may exist, with the components of the computer system 700 being coupled to the single bus. Moreover, the computer system 700 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 700 that, when read and executed by one or more processors, cause the computer system 700 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 700, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 702. Initially, the series of instructions may be stored on a storage device, such as the mass storage 718. However, the series of instructions can be stored on any suitable computer readable storage medium. Furthermore, the series of instructions need not be stored locally, and could be received from a remote storage device, such as a server on a network, via the network interface 716. The instructions are copied from the storage device, such as the mass storage 718, into the system memory 714 and then accessed and executed by the processor 702. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 700 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Moreover, whether or not there is express reference to an "embodiment" or the like, various features are described, which may be variously combined and included in some embodiments, but also variously omitted in other embodiments. Similarly, various features are described that may be preferences or requirements for some embodiments, but not other embodiments.

The language used herein has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A computer-implemented method comprising:
determining, by a social networking system, that a publisher is providing a first live content stream for distribution through the social networking system, the first live content stream including copyrighted content;
determining, by a social networking system, that a broadcaster is providing a second live content stream for distribution through the social networking system;
exposing, by the social networking system, the first live content stream and the second live content stream to at least some users of the social networking system;
while the first live content stream and the second live content stream are being distributed through the social networking system, determining, by the social networking system, that at least some portions of the second live content stream match copyrighted content included in the first live content stream; and
providing, by the social networking system, at least one notification to the broadcaster of the second live content stream, wherein the notification indicates a potential copyright violation by the broadcaster.

2. The computer-implemented method of claim 1, wherein determining that the publisher is providing a first live content stream for distribution through the social networking system further comprises:
receiving, by the social networking system, a request to live stream the first live content stream from a computing device of the publisher, the request indicating that at least some content in the first live content stream is copyrighted;
preferably further comprising:
causing, by the social networking system, a set of fingerprints to be generated for the first live content stream as the first live content stream is received from the computing device of the publisher; and
storing, by the social networking system, the set of fingerprints for use in identifying other content that matches any portions of the first live content stream.

3. The computer-implemented method of claim 1 or 2, the method further comprising:
determining, by the social networking system, that the broadcaster of the second live content stream is continuing to provide the second live content stream despite having received the at least one notification; and
providing, by the social networking system, at least one notification to the publisher of the first live content stream, wherein the notification indicates a potential copyright violation by the broadcaster of the second live content stream, and wherein the notification identifies at least some portions of the second live content stream that match copyrighted content in the first live content stream.

4. The computer-implemented method of claim 3, wherein providing at least one notification to the publisher of the first live content stream further comprises:
determining, by the social networking system, that the second live content stream is being shared publically through the social networking system.

5. The computer-implemented method of claim 3 or 4, wherein providing at least one notification to the publisher of the first live content stream further comprises:
determining, by the social networking system, that the second live content stream is being shared privately through the social networking system; and
determining, by the social networking system, that the broadcaster has consented to sharing the portions of the second live content stream that match the copyrighted content with the publisher of the first live content stream.

6. The computer-implemented method of any of claims 3 to 5, wherein providing at least one notification to the publisher of the first live content stream further comprises:
providing, by the social networking system, the publisher with an interface for viewing at least the portions of the second live content stream that match the copyrighted content in the first live content stream;
preferably wherein the interface includes options for at least playing back the portions of the second live content stream that match the copyrighted content in the first live content stream and reporting the second live content stream as a copyright violation.

7. The computer-implemented method of any of claims 1 to 6, wherein determining that at least some portions of the second live content stream match copyrighted content included in the first live content stream further comprises:
determining, by the social networking system, at least one contiguous sequence of frames in the second live content stream that match a contiguous sequence of frames in the first live content item, the sequence of frames satisfying a threshold duration of time.

8. The computer-implemented method of any of claims 1 to 7, the method further comprising:
determining, by the social networking system, that portions of the second live content stream that match the copyrighted content included in the first live content stream satisfy a threshold duration of time; and
causing, by the social networking system, the second live content stream to be inaccessible through the social networking system.

9. A system comprising:
at least one processor; and
a memory storing instructions that, when executed by the at least one processor, cause the system to perform:
determining that a publisher is providing a first live content stream for distribution through the social networking system, the first live content stream including copyrighted content;
determining that a broadcaster is providing a second live content stream for distribution through the social networking system;
exposing the first live content stream and the second live content stream to at least some users of the social networking system;
while the first live content stream and the second live content stream are being distributed through the social networking system, determining that at least some portions of the second live content stream match copyrighted content included in the first live content stream; and
providing at least one notification to the broadcaster of the second live content stream, wherein the notification indicates a potential copyright violation by the broadcaster.

10. The system of claim 9, wherein determining that the publisher is providing a first live content stream for distribution through the social networking system further causes the system to perform:
receiving a request to live stream the first live content stream from a computing device of the publisher, the request indicating that at least some content in the first live content stream is copyrighted;
preferably wherein the system further performs:
causing a set of fingerprints to be generated for the first live content stream as the first live content stream is received from the computing device of the publisher; and
storing the set of fingerprints for use in identifying other content that matches any portions of the first live content stream.

11. The system of claim 9 or 10, wherein the system further performs:
determining that the broadcaster of the second live content stream is continuing to provide the second live content stream despite having received the at least one notification; and
providing at least one notification to the publisher of the first live content stream, wherein the notification indicates a potential copyright violation by the broadcaster of the second live content stream, and wherein the notification identifies at least some portions of the second live content stream that match copyrighted content in the first live content stream;
preferably wherein providing at least one notification to the publisher of the first live content stream further causes the system to perform:
determining that the second live content stream is being shared publically through the social networking system.

12. A non-transitory computer-readable storage medium including instructions that, when executed by at least one processor of a computing system, cause the computing system to perform a method comprising:
determining that a publisher is providing a first live content stream for distribution through the social networking system, the first live content stream including copyrighted content;
determining that a broadcaster is providing a second live content stream for distribution through the social networking system;
exposing the first live content stream and the second live content stream to at least some users of the social networking system;
while the first live content stream and the second live content stream are being distributed through the social networking system, determining that at least some portions of the second live content stream match copyrighted content included in the first live content stream; and
providing at least one notification to the broadcaster of the second live content stream, wherein the notification indicates a potential copyright violation by the broadcaster.

13. The non-transitory computer-readable storage medium of claim 12, wherein determining that the publisher is providing a first live content stream for distribution through the social networking system further causes the computing system to perform:
receiving a request to live stream the first live content stream from a computing device of the publisher, the request indicating that at least some content in the first live content stream is copyrighted;
preferably wherein the computing system further performs:
causing a set of fingerprints to be generated for the first live content stream as the first live content stream is received from the computing device of the publisher; and
storing the set of fingerprints for use in identifying other content that matches any portions of the first live content stream.

14. The non-transitory computer-readable storage medium of claim 12 or 13, wherein the computing system further performs:
determining that the broadcaster of the second live content stream is continuing to provide the second live content stream despite having received the at least one notification; and
providing at least one notification to the publisher of the first live content stream, wherein the notification indicates a potential copyright violation by the broadcaster of the second live content stream, and wherein the notification identifies at least some portions of the second live content stream that match copyrighted content in the first live content stream.

15. The non-transitory computer-readable storage medium of claim 14, wherein providing at least one notification to the publisher of the first live content stream further causes the computing system to perform:
determining that the second live content stream is being shared publically through the social networking system.
